## Europäisches Patentamt

## European Patent Office

## Office européen des brevets

(11) Veröffentlichungsnummer: **0 221 849**

**B1**

(12) **EUROPÄISCHE PATENTSCHRIFT**

(45) Veröffentlichungstag der Patentschrift:
**12.10.88**

(51) Int. Cl.⁴: **B 01 J  19/18, C 07 C  113/04**

(21) Anmeldenummer: **86810480.3**

(22) Anmeldetag: **27.10.86**

(54) **Rohrreaktor.**

(30) Priorität: **01.11.85  CH 4834/85**
**16.07.86  CH 2831/86**

(43) Veröffentlichungstag der Anmeldung:
**13.05.87 Patentblatt 87/20**

(45) Bekanntmachung des Hinweises auf die Patenterteilung:
**12.10.88 Patentblatt 88/41**

(84) Benannte Vertragsstaaten:
**BE CH DE ES FR GB IT LI NL**

(56) Entgegenhaltungen:
**EP-A-0 006 190**
**DE-B-1 125 175**
**US-A-3 716 590**

(73) Patentinhaber: **CIBA- GEIGY AG, Klybeckstrasse 141, CH- 4002 Basel (CH)**

(72) Erfinder: **Arnold, Vladimir, Dr., Landskronstrasse 23, CH- 4056 Basel (CH)**
Erfinder: **Rumo, Bernhard, Dornacherstrasse 73, CH- 4053 Basel (CH)**

## Beschreibung

Die vorliegende Erfindung betrifft einen Rohrreaktor sowie dessen Verwendung und ein Verfahren zur kontinuierlichen Durchführung von heterogenen Reaktionen. Der Reaktor eignet sich aber auch zur Durchführung von homogenen Reaktionen, bei denen der Wärmeaustausch beschleunigt werden soll.

Anfänglich wurde die Reaktionsapparatur jeweils speziell auf die spezifische chemische Reaktion zugeschnitten. Seit Anfang dieses Jahrhunderts wurde dann allmählich damit begonnen, den Einfluss der Strömung, des Mischens, der Verweilzeitverteilung und des Stoff- und Wärmeübergangs auf chemische Reaktionen ganz generell zu untersuchen. Der Begriff "chemische Reaktionstechnik" kam allerdings erst Mitte der Fünfzigerjahre auf. Das Gebiet der Reaktorentwicklung ist also noch ziemlich jung, und dementsprechend sind noch viele Probleme zu lösen.

Ein besonderes, bisher noch nicht in befriedigender Weise gelöstes Problem der Reaktionstechnik ist die Beherrschung von heterogenen Reaktionen. Besonders in Fällen, wo sich eine Rückvermischung negativ auf den Ausgang der Reaktion auswirkt (z. B. mögliche Folgereaktion) und möglichst gute Durchmischung zur Beschleunigung der Reaktion notwendig ist, wird die Auswahl eines geeigneten Reaktionsapparates schwierig. Im folgenden werden einige bekannte Reaktortypen kurz vorgestellt.

Als erster Reaktortyp sei der Rührkessel genannt. Dieser besteht aus einem Gefäss, in dem sich Rührelemente, beispielsweise in Drehung versetzte Schrauben oder Flügelelemente, befinden. Mit Hilfe von Rührkesseln kann zwar eine ausgezeichnete Durchmischung erzielt werden. Da sich jedoch sowohl die Ausgangskomponenten als auch das entstehende Endprodukt im gleichen Gefäss befinden und ständig durchmischt werden, ist, eine Rückvermischung nicht zu vermeiden. Dies ist systemtechnisch bedingt.

Ein weiterer, häufig verwendeter Reaktortyp ist der Rohrreaktor. Dieser besteht aus einem zylindrischen Rohr, in dessen eines Ende die Ausgangskomponenten eingelassen werden. Infolge des ständigen Nachströmens werden diese durch das Rohr getrieben, reagieren auf dem Weg durch das Rohr miteinander und gelangen als Endprodukt durch das andere Rohrende. Weil die nachströmenden Komponenten die bereits im Rohr befindlichen wegschieben, ist die Rückvermischung verhältnismässig gering. Allerdings ist infolge der laminaren Strömung die Durchmischung nicht besonders gut. Eine bessere Durchmischung wird mit höheren Strömungsgeschwindigkeiten und den dadurch entstehenden Turbulenzen erzielt. Allerdings werden sehr lange Rohre erforderlich, damit die nötigen Verweilzeiten gewährleistet sind.

Eine Kombination von Rohrreaktor und Rührkessel besteht darin, den Rohrreaktor in mehrere Kammern zu unterteilen, die als Rührkessel ausgebildet und in Kaskade hintereinander geschaltet sind, wobei die Komponenten während des Durchmischens nicht stationär im Rührkessel verbleiben, sondern diesen durchströmen. Diese Kombination hat allerdings einige Nachteile. Durch die vom Rührelement ausgehende Zentrifugalkraft wird eine Sedimentierung von Partikeln bewirkt. Ferner ist beim Rührelement die Geschwindigkeit nicht überall gleich, und zwar ist nahe der Antriebswelle die Geschwindigkeit am kleinsten, so dass keine gleichmässige Durchmischung erzielbar ist. Ein weiterer Nachteil ist darin zu sehen, dass die Reaktorelemente schlecht zu reinigen sind.

Weitere Reaktoren sind z. B. in FR-A-2 321 513, US-A-4 268 437, DE-B-1 125 175 und US-A-3 716 590 beschrieben. Diese bekannten Reaktoren sind jedoch für die Durchführung von heterogenen Reaktionen ebenfalls nicht oder zumindest nur sehr schlecht geeignet.

Die Erfindung, wie sie in den Ansprüchen 1 bis 12 gekennzeichnet ist, löst die Aufgabe,

a)  einen möglichst kurzen zylindrischen Reaktor zu schaffen,
b)  der - verglichen mit herkömmlichen Reaktoren - dank intensiver Durchmischung eine Beschleunigung der Reaktion ermöglicht,
c)  bei welchem die Rückvermischung möglichst gering ist, und
d)  der leicht gereinigt werden kann.

Der erfindungsgemässe Reaktor kann, wie gesagt, zur kontinuierlichen Durchführung heterogener Reaktionen verwendet werden. Ein wichtiges Beispiel für eine heterogene Reaktion ist die Diazotierung von in wässrigem Medium unlöslichen Aminoverbindungen, wie 4-Aminoazobenzol. Wenn eine Diazotierungsreaktion nicht genügend schnell verläuft, zersetzt sich das Nitrit unter Gasentwicklung, was unerwünscht ist. Um heterogene Reaktionen zu beschleunigen, hat man bisher die im Reaktionsmedium unlöslichen Reaktionspartner superfein gemahlen und/oder dem Reaktionsmedium Tenside und/oder organische Lösungsmittel zugesetzt.

Die Erfindung, wie sie in den Ansprüchen 13 bis 18 definiert ist, löst die Aufgabe,

a)  heterogene Reaktionen zu beschleunigen, da eine bessere Durchmischung und infolgedessen ein besserer Stoffausstausch eintritt,
b)  ohne dass eine wesentliche Rückvermischung erfolgt,
c)  so dass unerwünschte Nebenreaktionen vermieden werden und
d)  dadurch die Ausbeute erhöht wird.

Im Falle von heterogenen Diazotierungsreaktionen verläuft z. B. die Diazotierung schneller als die Nitritzersetzung.

Nachstehend wird die Erfindung anhand von Figuren beispielsweise näher erläutert. Es zeigen:

Fig. 1    eine schematische Darstellung des erfindungsgemässen Reaktors,

Fig. 2    zwei in Kaskade geschaltete erfindungsgemässe Reaktoren

Fig. 3    eine besonders für Diazotierungen geeignete Ausführungsform des erfindungsgemässen Reaktors,

Fig. 4    ein weiteres Ausführungsbeispiel eines Reaktors für Diazotierung,

Fig. 5    eine weitere Ausführungsform ähnlich derjenigen von Fig. 1,

Fig. 6    den oberen Bereich einer bevorzugten Ausführungsform, und

Fig. 7    den unteren Bereich einer ähnlichen Ausführungsform des erfindungsgemässen Reaktors, die sich von derjenigen nach Fig. 6 durch die Dimensionierung des Kolbens unterscheidet.

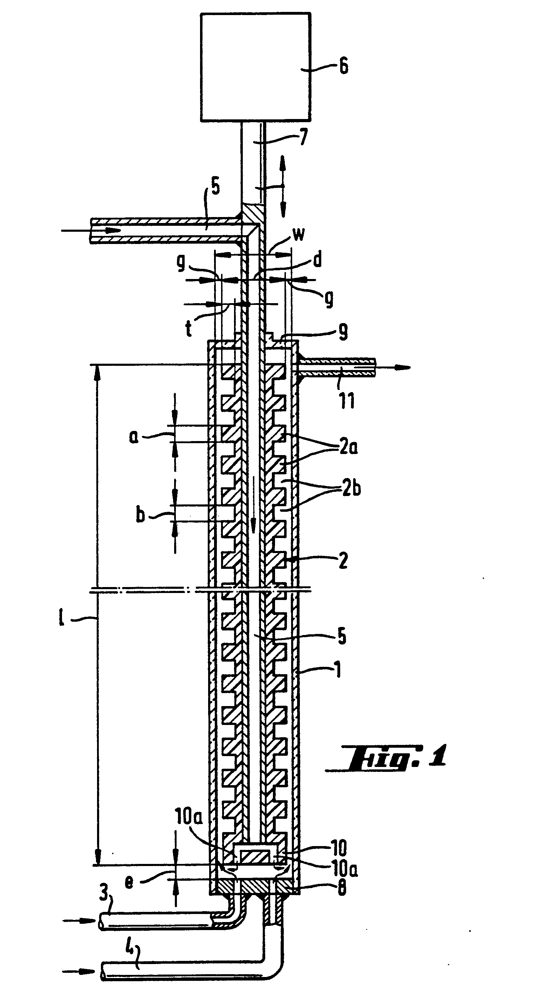

In Fig. 1 ist ein erfindungsgemässer Reaktor gezeigt, der im wesentlichen aus einem zylindrischen Rohr 1, das an seinem unteren und an seinem oberen Ende mit einem Abschluss 8 bzw. 9 versehen ist, besteht. Das Reaktorrohr 1 besteht bevorzugt aus Glas und enthält in seinem Inneren einen mit einem Profil versehenen Kolben 2. Das Profil umfasst vorzugsweise aus radial vorspringenden, flanschförmigen Rippen 2a. Die Zwischenräume zwischen je zwei benachbarten Rippen sind mit 2b bezeichnet. Der Kolben ist über ein Gestänge 7 mit einem Vibrator 6 oder einer anderen geeigneten Einrichtung zur Erzeugung von Längsschwingungen verbunden. Die zu verarbeitenden Substanzen gelangen durch verschiedene Einlassrohre 3, 4 und 5 in der Nähe des unteren Abschlusses 8 ins Innere des Reaktorrohres 1. Ein Einlassrohr 5 führt durch einen Teil des Gestänges 7 und durch den Kolben 2 in die Nähe des unteren Abschlusses 8 im Inneren des Reaktorrohres 1. Am Kolbenende 10, das auch in Form eines statischen Mischers ausgebildet sein kann, sind eine oder mehrere Öffnungen 10a zwecks Zufuhr der einzulassenden Substanz vorgesehen. Die beiden Einlassrohre 3 und 4 führen durch den unteren Abschluss 8. Das Endprodukt verlässt das Reaktorrohr 1 in der Nähe des oberen Rohrabschlusses 9 durch ein Auslassrohr 11.

Das Reaktorrohr 1 kann an verschiedenen Stellen mit Messpunkten versehen werden, um so die Reaktionskinetik verfolgen und überprüfen zu können.

Als Schwingungsfrequenz eignet sich erfahrungsgemäss eine Frequenz zwischen 0,1 Hz und 1 kHz. Als Ausgangspunkt für die Dimensionierung des Reaktors eignet sich der Schwingungshub (Kolbenhub), der je nach Anordnung zwischen 0,1 bis ca. 30 mm variieren kann. Der Spalt g zwischen Rohr 1 und Kolben 2 beträgt vorzugsweise das 0,05- bis 5-fache des Schwingungshubes. Die Dicke der flanschförmigen Rippen 2a sowie der zwischen jeweils zwei Rippen liegende Abstand 2b sollte etwa das 0,05- bis 5-fach des Vibrationshubes betragen. Die gleiche Grösse weist vorzugsweise der Abstand e zwischen dem unteren Kolbenende und dem Reaktorboden 8 auf, wobei dieser Abstand e allerdings mindestens dem Schwingungshub entsprechen muss.

Die Funktionsweise des Reaktors ist folgende:

Die zu verarbeitenden Komponenten gelangen in den unteren Bereich des Reaktorrohres 1, strömen nach oben und verlassen das Reaktorrohr 1 in seinem oberen Bereich durch das Auslassrohr 11. Durch die periodischen Längsschwingungen des Kolbens 2 bilden sich in den Zwischenräumen 2b zwischen jeweils benachbarten Rippen 2a des Kolbens 2 Turbulenzen. Diese bewirken eine intensive Durchmischung der Ausgangssubstanzen. Ferner haben die Turbulenzen reinigende Eigenschaften. Es bleiben keine Produkte oder Zwischenprodukte hängen, die sich mit den nachströmenden Ausgangsprodukten rückvermischen könnten. Diese Eigenschaften sind besonders wichtig für heterogene Reaktionen, deren Reaktionsgeschwindigkeit direkt proportional zur Mischintensität ist.

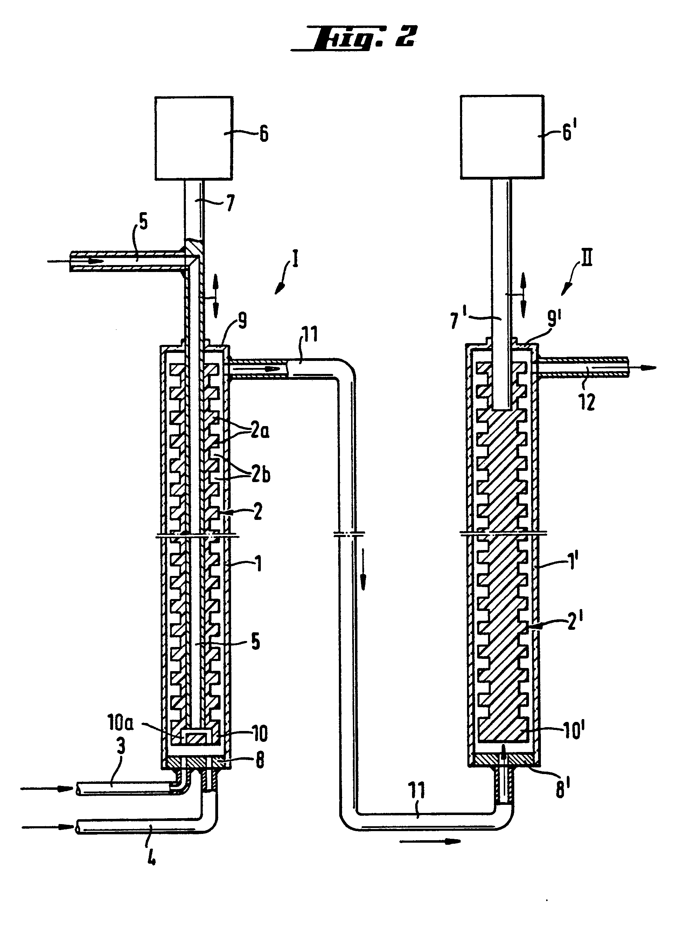

In Fig. 2 sind zwei in Kaskade geschaltete Reaktoren I, II gezeigt. Das Ausgangsrohr 11 des ersten Reaktors I führt hierbei in den unteren Abschluss 8' des zweiten Reaktors II und durch diesen hindurch in dessen Ausgangsrohr 12. Die übrigen Teile des Reaktors II, die denjenigen des Reaktors I entsprechen, sind mit 1', 2', 6', 7', 9' bzw. 10' bezeichnet. Mit Hilfe derartiger Kaskadeschaltungen kann eine Vervielfachung der wirksamen Reaktorrohrlänge erzielt werden.

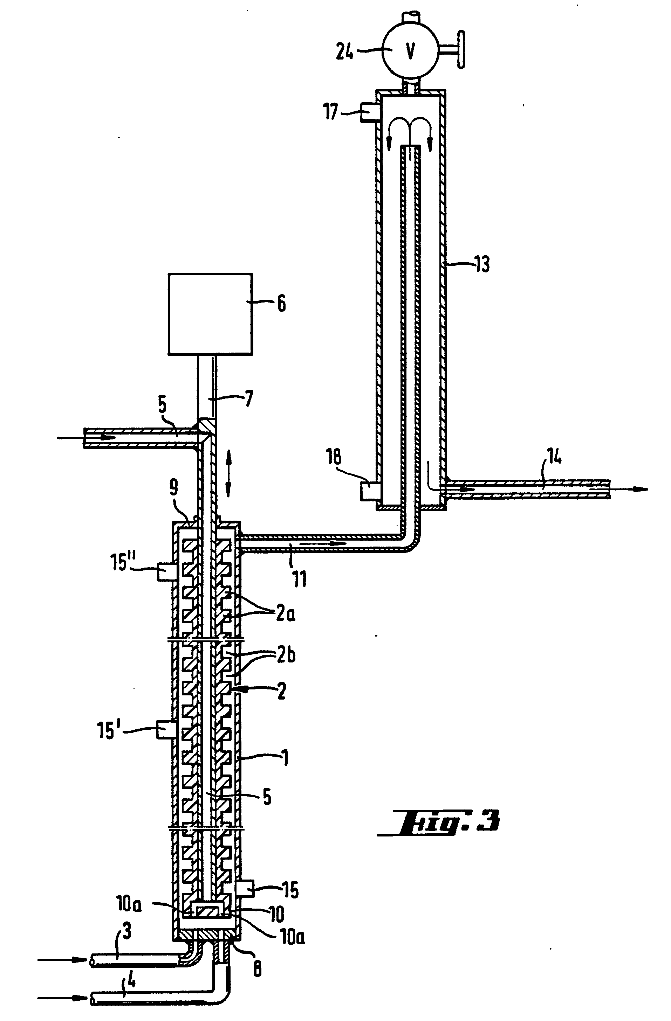

In Fig. 3 ist eine besonders für Diazotierungen geeignete Ausführungsform des erfindungsgemässen Reaktors gezeigt. Das Auslassrohr 11 führt zu einem mit einem Auslauf 14 versehenen Entlastungsgefäss 13, welches der Kontrolle der Gasentwicklung dient. Sowohl das Reaktorrohr 1 als auch das Entlastungsgefäss 13 sind mit verschiedenen Messpunkten 15, 15', 15'' bzw. 17 und 18 zwecks Verfolgung der Reaktionskinetik versehen.

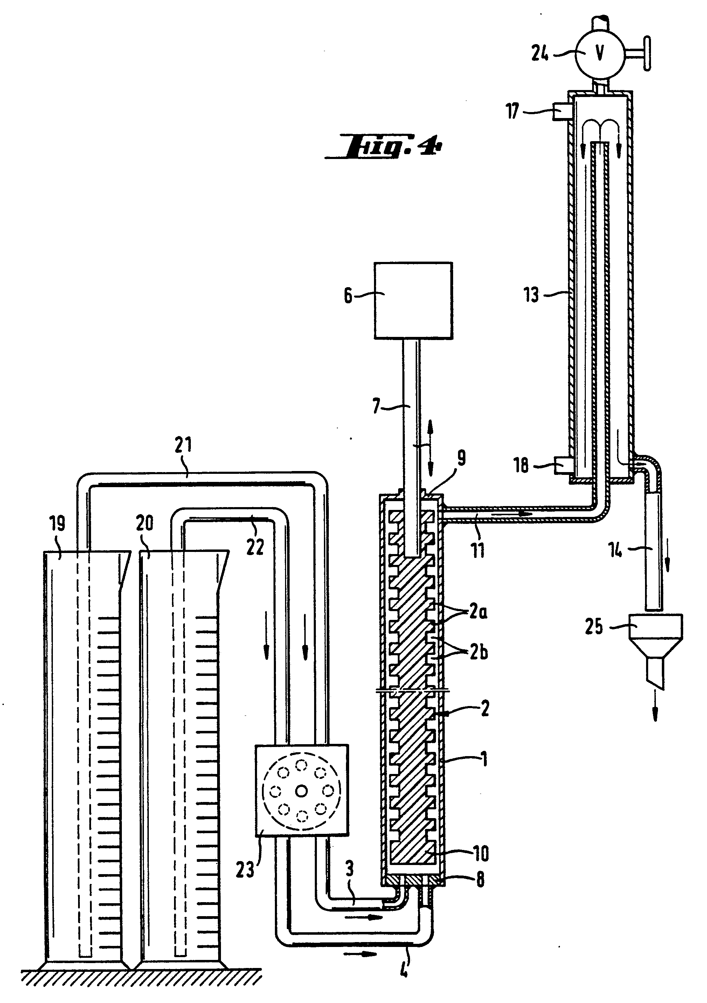

Als Ausführungsbeispiel ist in Fig. 4 eine Apparatur zur Diazotierung von 4-Aminoazobenzol gezeigt. Zwei Messzylinder 19, 20 mit einem Fassungsvermögen von 500 ml sind über zwei Leitungen 3 bzw. 4 via eine Schlauchquetschpumpe 23 am unteren Abschluss 8 eines mit einem Kolben 2 versehenen Reaktorrohres 1 verbunden. Als Schlauchquetschpumpe 23 eignet sich beispielsweise eine ISMATEC MV-GE mit Mehrfachbelegung. Das Volumen des Reaktorrohres 1 beträgt 33 ml. Der Kolben 2 kann über eine Kolbenstange 7 mittels eines handelsüblichen Vibrators 6 in axiale Längsschwingungen versetzt werden. Die Schwingfrequenz des Vibrators 6 beträgt 50 hz. Die Schwingungsamplitude ist von 0 bis 3 mm frei regulierbar. Ein Auslassrohr 11 führt zu einem Entlastungsgefäss 13, welches oben mit einem Entlüftungshahn 24 versehen ist. Ein Auslass 14 des Entlastungsgefässes 13 führt zu einer Nutsche 25.

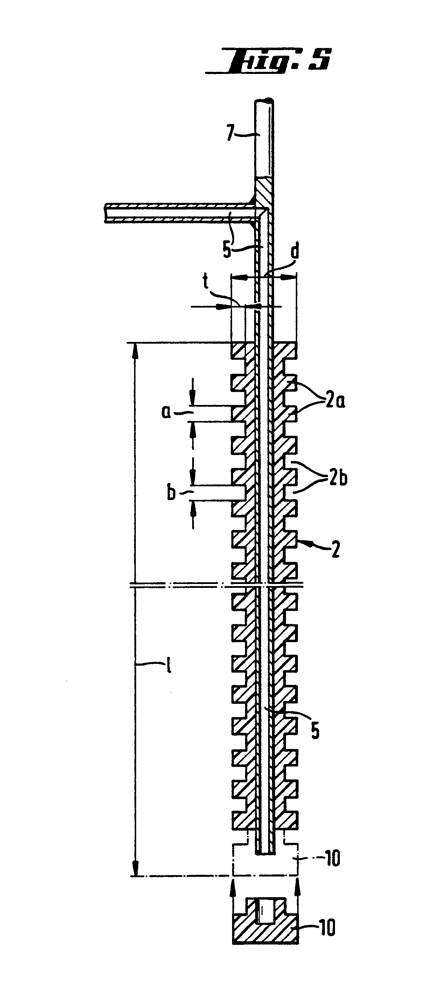

In der Ausführungsform nach Fig. 5 ist das untere Kolbenende von demjenigen nach Fig. 1 etwas abweichend ausgebildet. Wiederum ist der Kolben 2 in seinem Innern mit einem Einlassrohr 5 versehen. Dieses besteht vorzugsweise aus einem Metallrohr mit einem Aussendurchmesser von z. B. 5 mm. Der Kolben 2 besteht aus einem Teflonrohr, in dessen zylindrische Aussenwandung das Profil hineingefräst wurde. Die Länge l des Kolbens beträgt z. B. 350 mm. Das Kolbenende 10 ist in diesem Ausführungsbeispiel abnehmbar. Es kann mit Löchern versehen sein oder als blinder Abschluss dienen. In beiden Fällen kann es als statischer Mischer ausgebildet sein. Der Durchmesser d des grössten Kolbenquerschnitts beträgt z. B. 12 mm. Die Rippen 2a haben jede eine axiale Länge a von 3 mm und der Zwischenraum 2b zwischen zwei benachbarten Rippen hat eine axiale Länge b von 3 mm. Die Rillentiefe t der zwischen den Rippen 2a eingefrästen Rillen 2b ist 2,5 mm. Die lichte Weite w des Reaktorrohres 1 beträgt im Beispiel 14 mm, woraus sich ein Abstand des den Kolben 2 einhüllenden Zylinders zur Reaktorwand von 1 mm ergibt.

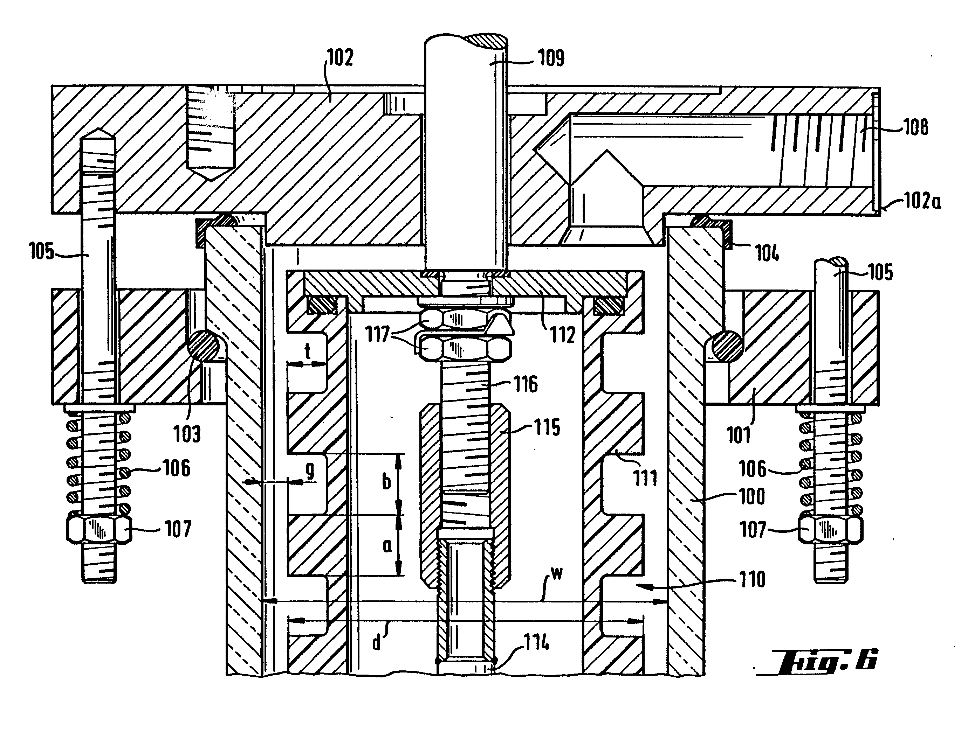

In Fig. 6 ist ein Axialschnitt durch den oberen Teil einer bevorzugten Ausführungsform des erfindungsgemässen Reaktors im Maßstab 1 : 1 gezeigt.

Das aus Glas gefertige zylindrische Reaktorrohr 100 ist an seinem oberen Ende in zwei vorzugsweise aus Metall hergestellten Flanschen 101 und 102 eingespannt, wobei ein O-Ring 103 und eine Flachdichtung 104 die nötige Dichtigkeit und Elastizität der Verbindungsfugen zwischen Glas- und Metallteilen ergeben. Die beiden Flansche 101 und 102 sind mittels Schraubbolzen 105, Spannfedern 106 und Spannmuttern 107 zusammengespannt.

Der obere Flansch 102 bildet einen dicht sitzenden Abschlussdeckel für das Reaktorrohr 100 und enthält einen seitlich aus der Flanschumfangswandung 102 a ausmündenden Auslasskanal 108 zur Abfuhr des Reaktionsprodukts. Ferner ist das Ende der Vibratorstange 109 dicht durch diesen Flansch hindurchgeführt.

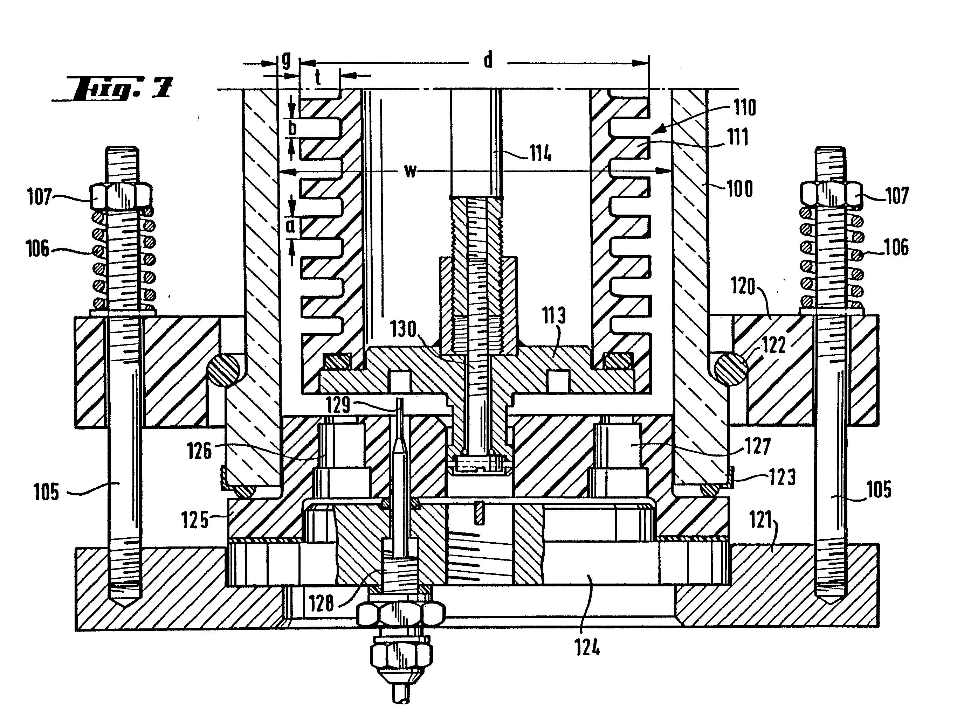

Im Innern des Reaktorrohrs 100 befindet sich der Kolben 110. Er ist hohl ausgebildet und besteht im wesentlichen aus einem profilierten Mantel 111, einem oberen und einem unteren Deckel 112 bzw. 113 (Fig. 7) und einer axialen Verbindungsstange 114, welche die beiden Deckel zusammenspannt. Das obere Ende der Verbindungsstange ist in eine Muffe 115 eingeschraubt, die ihrerseits auf einem

Gewindeverlängerungsstück 116 der Vibrator-Stange 109 aufgeschraubt ist. Dieses Gewindeverlängerungsstück 116 ist durch den Deckel 112 dicht hindurchgeführt und mit diesem mittels Muttern 117 fest verschraubt. Die axialen Bewegungen der Vibratorstange 109 werden somit über den Deckel 112 auf den Kolben 110 übertragen.

Der Aufbau des unteren Reaktor-Bereichs der Ausführungsform nach Fig. 6 entspricht demjenigen der Ausführungsform, die in Fig. 7 gezeigt ist. Auch in diesem unteren Bereich ist das Reaktorrohr 100 zwischen zwei Flanschen 120 und 121 eingespannt, wobei wiederum ein O-Ring 122 und eine Flachdichtung 123 für die nötige Elastizität und Dichtigkeit sorgen. Der untere Flansch 121 umschliesst einen äusseren Bodenteil 124, der wiederum einen inneren Bodenteil 125 trägt, welcher dicht im Reaktorrohr 100 eingesetzt ist. Die beiden Bodenteile 124 und 125 sind mit hier nur teilweise sichtbaren Kanälen 126 und 127 zur Zu- bzw. Abfuhr von Medium versehen. Ferner ist in die beiden Bodenteile ein Temperaturmessfühler 128 dicht eingesetzt, dessen Fühlspitze 129 in das Reaktor-Innere hineinragt. Der untere Kolbendeckel 113 ist mit dem unteren Ende der Verbindungsstange 114 mittels einer Schraube 130 verbunden.

Die Abmessungen der Profilierung des Kolbenmantels 111 sind aus den Fig. 6 und 7 ersichtlich. In Fig. 6 ist eine etwas gröbere, in Fig. 7 eine etwas feinere Profilierung dargestellt (Masstab 1 : 1).

Folgende Relationen zwischen der Tiefe t der einzelnen Rillen 2b des Kolbenmantels, der axialen Breite b der Rillen, der Länge a der Umfassungswandung der Rippen 2a in axialer Richtung, zwischen je zwei Rillen, dem Abstand g zwischen dem Kolben und der Reaktorinnenwand und dem äussern Kolbendurchmesser d haben sich in der Praxis als besonders günstig erwiesen und sollten nicht wesentlich über- bzw. unterschritten werden:

$$t : t$$
$$g : 0,5 \cdot t \ldots\ldots 3 \cdot t$$
$$b : 0,2 \cdot t \ldots\ldots 2 \cdot t, \text{ vorzugsweise } 0,5 \cdot t \ldots\ldots 1,0 \cdot t$$
$$a : 0,5 \cdot b \ldots\ldots 2 \cdot b$$
$$d : \geqslant 4 \cdot t.$$

Durch diese Dimensionierung wird eine ideale Vermischung ohne nennenswerte Rückvermischung erreicht.

Im folgenden Anwendungsbeispiel verhalten sich Gewicht steile zu Volumenteilen wie Gramm zu Milliliter.

**Beispiel**

0,5 Gewichtsteile eines Kondensationsprodukts aus p-tert-octylphenol mit 8 Mol Äthylenoxid (Netzmittel) werden in 200 Volumenteilen Wasser gelöst. Zu der so erhaltenen Lösung werden 100,2 Gewichtsteile gemahlenes 98,3-%-iges 4-Aminoazobenzol und 125 Volumenteile 4-normale wässrige Natriumnitritlösung zugesetzt. Die dabei erhaltene Suspension wird mit Wasser auf 500 Volumenteile aufgefüllt und mittels eines Vibromischers "homogenisiert". Das Molverhältnis von 4-Aminoazobenzol zu Natriumnitrit beträgt 1 : 1.

122 Gewicht steile 33-%-ige Salzsäure (Molverhältnis von 4-Aminoazobenzol zu HCl 1,0 : 2,2) werden mit 390 Gewichtsteilen Wasser auf 500 Volumenteile aufgefüllt.

Die oben erhaltene Suspension und die oben erhaltene Salzsäurelösung werden dem in Fig. 3 oder 4 dargestellten Reaktor durch die Einlassrohre 3 bzw. 4 mittels einer Schlauchquetschpumpe gleichzeitig kontinuierlich zugeführt. Die Reaktion wird quasiadiabatisch bei Raumtemperatur ausgeführt. Die gebildete Reaktionsmischung wird sofort nach ihrem Austritt aus dem Auslauf 14 klärfiltriert. Bei Verweilzeiten von 20 bis 60 Sekunden im Reaktor wurden Umsätze von 98 bis 99 % erzielt. Es wurde keine Gasentwicklung beobachtet. Es liessen sich Durchsätze von 1 bis 3 Mol/Stunde erreichen.

## Patentansprüche

1. Rohrreaktor mit einem Reaktorrohr (1), das an seinem einen Ende mit wenigstens einem Einlass (3, 4, 5) für die zu verarbeitenden Substanzen und an seinem anderen Ende mit wenigstens einem Auslass (11) für das zu erstellende Produkt versehen ist, und mit einem axial verschiebbaren Einsatz im Reaktorrohr sowie mit einem Antrieb (6, 7) zum axialen Hin- und Herbewegen des Einsatzes relativ zum Reaktorrohr (1), dadurch gekennzeichnet, dass der Einsatz im wesentlichen als ein an seinem Mantel mit Umfangsrillen versehener Kolben (2) ausgebildet ist, wobei die Tiefe t der Umfangssrillen weniger als etwa die Hälfte des äusseren Radius R des Kolbens beträgt.

2. Rohrreaktor nach Anspruch 1, dadurch gekennzeichnet, dass der Abstand (g) zwischen dem Kolbenmantel und der Innenwand des Reaktorrohrs etwa 0,5 bis 3 mal die Tiefe t der Umfangsrillen beträgt.

3. Rohrreaktor nach Anspruch 1 oder 2, dadurch gekennzeichnet, dass die Breite b der Umfangsrillen etwa 0,2 bis 2 mal, vorzugweise etwa 0,5 bis 1 mal die Tiefe t der Umfangsrillen beträgt.

4. Rohrreaktor nach einem der Ansprüche 1 bis 3, dadurch gekennzeichnet, dass der Abstand a der Umfangsrillen etwa 0,5 bis 2 mal die Breite b der Umfangsrillen beträgt.

5. Rohrreaktor nach einem der Ansprüche 1 bis 4, dadurch gekennzeichnet, dass die Umfangsrillen einen im wesentlichen rechteckigen Querschnitt aufweisen.

6. Reaktor nach einem der Ansprüche 1 bis 5, dadurch gekennzeichnet, dass wenigstens ein Einlass (5) durch den Kolben (1) hindurchgeführt und das Kolbenende mit einem Einlassventil (10) versehen ist.

7. Reaktor nach einem der Ansprüche 1 bis 6, dadurch gekennzeichnet, dass das Kolbenende wenigstens teilweise als statischer Mischer ausgebildet ist.

8. Reaktor nach einem der Ansprüche 1 bis 7, dadurch gekennzeichnet, dass die Schwingungsfrequenz des Kolbens 0,1 Hz bis 1 kHz und der Schwingungshub 0,1 bis 30 mm beträgt.

9. Reaktor nach einem der Ansprüche 1 bis 8, dadurch gekennzeichnet, dass der Spalt (g) zwischen Kolben (2) und Rohr (1) das 0,05- bis 5-fache des Schwingungshubes ist.

10. Reaktor nach einem der Ansprüche 1 bis 9, dadurch gekennzeichnet, dass die Breite (b) der Umfangsrillen das 0,05- bis 5-fache des Schwingungshubes ist.

11. Reaktor nach einem der Ansprüche 1 bis 10, dadurch gekennzeichnet, dass der Abstand (a) zwischen den Umfangsrillen das 0,05- bis 5-fache des Schwingungshubes beträgt.

12. Reaktor nach einem der Ansprüche 1 bis 11, dadurch gekennzeichnet, dass der Abstand (e) zwischen Kolbenende und Reaktorrohrboden (8) der Breite der Umfangsrillen wenigstens aber dem Schwingungshub entspricht.

13. Verwendung des Reaktors nach einem der Ansprüche 1 bis 12 zur kontinuierlichen Durchführung von heterogenen Reaktionen, dadurch gekennzeichnet, dass man eine Suspension des im Reaktionsmedium unlöslichen Reaktionspartners oder Suspensionen der im Reaktionsmedium unlöslichen Reaktionspartner sowie eine Lösung des im Raktionsmedium löslichen Reaktionspartners oder Lösungen der im Reaktionsmedium löslichen Reaktionspartner gleichzeitig kontinuierlich in das untere Ende des Reaktorrohres (1) einführt, die Suspension(en) und die Lösung(en) durch Betätigung des Antriebs (6, 7) zum axialen Hin- und Herbewegen des Einsatzes intensiv mischt und nach oben fördert, ohne dass eine wesentliche Rückvermischung von Volumeneinheiten mit verschiedenen Verweilzeiten in dem Reaktorrohr (1) eintritt, und die das im Reaktionsmedium vorzugsweise lösliche Reaktionsprodukt enthaltende Suspension oder Lösung am oberen Ende des Reaktorrohres (1) entnimmt und gegebenenfalls in an sich bekannter Weise aufarbeitet, um das Reaktionsprodukt zu isolieren.

14. Verwendung nach Anspruch 13 zur kontinuierlichen Diazotierung einer in wässrigem Medium unlöslichen Aminoverbindung, dadurch gekennzeichnet, dass man eine wässrige Suspension der Aminoverbindung, eine wässrige Nitritlösung und eine wässrige Salzsäurelösung gleichzeitig kontinuierlich in das untere Ende des Reaktorrohrs (1) einführt und am oberen Ende des Reaktorrohres (1) eine Lösung einer in dem Reaktionsmedium löslichen Diazoniumverbindung entnimmt.

15. Verwendung nach Anspruch 14, dadurch gekennzeichnet, dass man zu einer Suspension von 4-Aminoazobenzol in Wasser, die vorzugsweise ein Netzmittel enthält, eine wässrige Natriumnitritlösung zusetzt und die erhaltene nitrithaltige Suspension gleichzeitig mit einer Salzsäurelösung in das untere Ende des Reaktorrohrs (1) einführt.

16. Verfahren zur kontinuierlichen Durchführung von heterogenen Reaktionen, dadurch gekennzeichnet, dass man eine Suspension des im Reaktionsmedium unlöslichen Reaktionspartners oder Suspensionen der im Reaktionsmedium unlöslichen Reaktionspartner sowie eine Lösung des im Reaktionsmedium löslichen Reaktionspartners oder Lösungen der im Reaktionsmedium löslichen Reaktionspartner gleichzeitig kontinuierlich in das untere Ende eines ein im wesentlichen vertikales Reaktionsrohr aufweisenden Reaktors einführt, die Suspension(en) und die Lösung(en) durch periodische lineare Auf- und Abbewegungen eines in dem Reaktionsrohr angeordneten, relativ fläche Umfangsrillen aufweisenden Kolbens intensiv vermischt und nach oben fördert, ohne dass eine wesentliche Rückvermischung von Volumeneinheiten mit verschiedenen Verweilzeiten in dem Reaktionsrohr eintritt, und die das im Reaktionsmedium vorzugsweise lösliche Reaktionsprodukt enthaltende Suspension oder Lösung am oberen Ende des Reaktionsrohres entnimmt und gegebenenfalls in an sich bekannter Weise aufarbeitet, um das Reaktionsprodukt zu isolieren.

17. Verfahren gemäss Anspruch 16, dadurch gekennzeichnet, dass man eine wässrige Suspension einer in wässrigem Medium unlöslichen Aminoverbindung mit einer wässrigen Nitritlösung und einer wässrigen Säurelösung diazotiert und eine Lösung der Diazoniumverbindung in dem wässrigen Reaktionsmedium am oberen Ende des Reaktionsrohrs entnimmt.

18. Verfahren nach Anspruch 17, dadurch gekennzeichnet, dass man zu einer Suspension von 4-Aminoazobenzol in Wasser, die vorzugsweise ein Netzmittel enthält, eine wässrige Natriumnitritlösung zusetzt und die erhaltene nitrithaltige Suspension gleichzeitig mit einer Salzsäurelösung in das untere Ende des Reaktionsrohrs einführt.

## Claims

1. A tubular reactor comprising a reactor tube (1) which is provided at one of its ends with at least one inlet means (3, 4, 5) for the substances to be processed and at least one outlet (11) at the other end for the product to be produced, and with axially moveable inset means in the reactor tube, and with drive means (6, 7) for axial to-and-fro displacement of said inset means relative to the reactor tube (1), characterised in that said inset means are formed essentially as a piston (2) provided with circumferential grooves in its skirt, the depth t of the circumferential grooves being less than about half the outer radius R of the piston.

2. The tubular reactor of Claim 1, characterised in that the distance (g) between the piston skirt and the internal wall of the reactor tube is about 0.5 to 3 times the depth t of the circumferential grooves.

3. The tubular reactor of Claim 1 or 2, characterised in that the width b of the circumferential grooves is about 0.2 to 2 times, preferably about 0.5 to 1 times, the depth t of the circumferential grooves.

4. The tubular reactor of one of Claims 1 to 3, characterised in that the distance a between the circumferential grooves is about 0.5 to 2 times the width b of the circumferential grooves.

5. The tubular reactor of one of Claims 1 to 4, characterised in that the circumferential grooves have a substantially rectangular cross-section.

6. The reactor of one of Claims 1 to 5, characterised in that at least one inlet means (5) extends through said piston (1), and the piston end is provided with an inlet valve (10).

7. The reactor of one of Claims 1 to 6, characterised in that said piston end is designed as least partly as a static mixer.

8. The reactor of one of Claims 1 to 7, characterised in that the frequency of oscillation of the piston is 0.1 Hz to 1 kHz, and the oscillation stroke is 0.1 to 30 mm.

9. The reactor of one of Claims 1 to 8, characterised in that the gap (g) between piston (2) and tube (1) is 0.05 to 5 times the oscillation stroke.

10. The reactor of one of Claims 1 to 9, characterised in that the width (b) of said circumferential grooves is 0.05 to 5 times the oscillation stroke.

11. The reactor of one of Claims 1 to 10, characterised in that the distance (a) between the circumferential grooves is 0.05 to 5 times the oscillation stroke.

12. The reactor of one of Claims 1 to 11, characterised in that the distance (e) between the piston end and reactor tube bottom (8) corresponds to the width of the circumferential grooves, but at least to the length of the oscillation stroke.

13. Use of the reactor of one of Claims 1 to 12 for continuously performing heterogeneous reactions, characterised in that a suspension of the reaction participant which is insoluble in the reaction medium or suspensions of the reaction participants which are insoluble in the reaction medium, and a solution of the reaction participant which is soluble in the reaction medium or solutions of the reaction participants which are soluble in the reaction medium is introduced simultaneously and continuously into the lower end of the reactor tube (1), the suspension(s) and the solution(s) are mixed thoroughly and conveyed upwards by operation of the drive means (6, 7) for the axial to- and-fro displacement of the inset means, while avoiding any substantial re-mixing of volume units having different sojourn times in said reaction tube (1); and the suspension or solution containing the reaction product which is preferably soluble in the reaction medium is removed from the upper end of said reactor tube (1), and optionally worked up in a known way in order to isolate the reaction product.

14. Use according to Claim 13 for continuous diazotisation of an amino compound being insoluble in an aqueous medium, characterised in that an aqueous suspension of the amino compound, an aqueous nitrite solution and an agueous solution of hydrochloric acid are introduced simultaneously and continuously into said lower end of the reactor tube (1), and a solution of a diazonium compound being soluble in the reaction medium is removed from the upper end of the reaction tube (1).

15. Use according to Claim 14, characterised in that an aqueous sodium nitrite solution is added to a suspension of 4-aminoazobenzene in water, which preferably contains a surfactant, and the resulting nitrite-containing suspension is introduced simultaneously with a hydrochloric acid solution into said lower end of said reactor tube (1).

16. A process for continuously performing heterogeneous reactions, characterised in that a suspension of the reaction participant which is insoluble in the reaction medium or suspensions of the reaction participants which are insoluble in the reaction medium, and a solution of the reaction participant which is soluble in the reaction medium or solutions of the reaction participants which are soluble in the reaction medium is introduced simultaneously and continuously into the lower end of a reactor, which comprises a substantially vertical reaction tube; the suspension(s) and the solution(s) are mixed thoroughly and conveyed upwards by periodic linear up-and-down movements of a piston having relatively flat circumferential grooves and arranged in the reaction tube while avoiding any substantial re-mixing of volume units having different sojourn times in said reaction tube, and the suspension or solution containing the reaction product, which is preferably soluble in the reaction medium, is removed from the upper end of said reaction tube (1), and optionally worked up in a known way in order to isolate the reaction product.

17. The process of Claim 16, characterised in that an aqueous suspension of an amino compound being insoluble in aqueous medium is diazotised with an aqueous nitrite solution and an aqueous hydrochloric acid solution, and a solution of the diazonium compound in the aqueous reaction medium is removed from the upper end of said reaction tube.

18. Process according to Claim 17, characterised in that an aqueous sodium nitrate solution is added to a suspension of 4-aminoazobenzene in water, which preferably contains a surfactant, and the resulting nitrite-containing suspension is introduced simultaneously with a hydrochloric acid solution into said lower end of said reaction tube.

## Revendications

1. Réacteur tubulaire comprenant un tube de réacteur (1) pourvu à l'une de ses extrémités d'au moins une entrée (3, 4, 5) pour les substances à traiter et à son autre extrémité d'au moins une sortie (11) pour le produit à fabriquer, et comprenant un insert mobile en translation axiale dans le tube de réacteur ainsi qu'une commande (6, 7) pour le déplacement axial de l'insert par rapport au tube de réacteur (1), caractérisé en ce que l'insert est réalisé sensiblement comme piston (2) pourvu de gorges circonférentielles sur son enveloppe, la profondeur t des gorges circonférentielles étant inférieure à environ la moitié du rayon extérieur R du piston.

2. Réacteur tubulaire selon la revendication 1, caractérisé en ce que la distance (g) entre l'enveloppe de piston et la paroi intérieure du tube de réacteur correspond à environ 0,5 à 3 fois la profondeur t des gorges circonférentielles.

3. Réacteur tubulaire selon la revendication 1 ou 2, caractérise en ce que la largeur b des gorges circonférentielles correspond à environ 0,2 à 2 fois, de preférence environ 0,5 à 1 fois, la profondeur t des gorges circonférentielles.

4. Réacteur tubulaire selon l'une quelconque des revendications 1 à 3, caractérisé en ce que la distance à entre les gorges circonférentielles correspond à environ 0,5 à 2 fois la largeur b des gorges circonférentielles.

5. Réacteur tubulaire selon l'une quelconque des revendications 1 à 4, caractérisé en ce que les gorges circonférentielles possèdent une section sensiblement rectangulaire.

6. Réacteur selon l'une quelconque des revendications 1 à 5, caractérisé en ce qu'au moins une entrée (5) traverse le piston (1) et l'extrémité de piston est pourvue d'une vanne d'entrée (10).

7. Réacteur selon l'une quelconque des revendications 1 à 6, caractérisé en ce que l'extrémité de piston est réalisée au moins en partie comme mélangeur statique.

8. Reacteur selon l'une quelconque des revendications 1 à 7, caractérisé en ce que la frequence d'oscillation du piston est de 0,1 Hz à 1 kHz et la course d'oscillation de 0,1 à 30 mm.

9. Reacteur selon l'une quelconque des revendications 1 à 8, caractérisé en ce que l'interstice (g) entre le piston (2) et le tube (1) correspond à 0,05 à 5 fois la course d'oscillation.

10. Réacteur selon l'une quelconque des revendications 1 à 9, caractérise en ce que la largeur (b) des gorges circonférentielles correspond à 0,05 à 5 fois la course d'oscillation.

11. Réacteur selon l'une quelconque des revendications 1 à 10, caractérisé en ce que la distance (a) entre les gorges circonférentielles correspond à 0,05 à 5 fois la course d'oscillation.

12. Réacteur selon l'une quelconque des revendications 1 à 11, caractérisé en ce que la distance (e) entre l'extrémité de piston et le fond (8) du tube de reacteur correpond à la largeur des gorges circonférentielles, mais au moins à la course d'oscillation.

13. Utilisation du réacteur selon l'une quelconque des revendications 1 à 12 pour la mise en oeuvre en continu de réactions hétérogènes, caractérisee en ce que l'on introduit de façon continue en même temps une suspension du partenaire de réaction non soluble dans le milieu de réaction ou des suspensions des partenaires de réaction non solubles dans le milieu de réaction ainsi qu'une solution du partenaire de réaction soluble dans le milieu de réaction ou des solutions des partenaires de réaction solubles dans le milieu de réaction, dans l'extrémité inferieure du tube de réacteur (1), on mélange intimement la (les) suspension(s) et la (les) solution(s), et on les transporte vers le haut en actionnant la commande (6, 7) pour le déplacement axial en va-et-vient de l'insert, sans qu'un remélangeage sensible d'unités de volume ayant différents temps de séjour dans le tube de réacteur (1) se produise, et on prélève la suspension ou solution, contenant le produit de réaction de préférence soluble dans le milieu de reaction, à l'extrémité supérieure du tube de réacteur (1) et la traite le cas échéant de façon connue en soi, afin d'isoler le produit de réaction.

14. Utilisation selon la revendication 13 pour la diazotation continue d'un compose amine non soluble en milieu aqueux, caractérisée en ce que l'on introduit de façon continue en même temps une suspension aqueuse du composé aminé, une solution aqueuse de nitrite et une solution aqueuse d'acide chlorhydrique dans l'extrémité inférieure du tube de réacteur (1) et prélève une solution d'un composé diazonium soluble dans le milieu de réaction à l'extrémité supérieure du tube de réacteur (1).

15. Utilisation selon la revendication 14, caractérisée en ce que l'on ajoute à une suspension de 4-aminoazobenzène dans de l'eau, contenant de préférence un agent mouillant, une solution aqueuse de nitrite de sodium et on introduit la suspension obtenue, contenant du nitrite, en même temps qu'une solution d'acide chlorhydrique, dans l'extrémité inférieure du tube de réacteur (1).

16. Procédé pour la mise en oeuvre continue de réactions hétérogènes, caractérisé en ce que l'on introduit de façon continue en même temps une suspension du partenaire de réaction non soluble dans le milieu de réaction ou des suspensions des partenaires de réaction non solubles dans le milieu de réaction, ainsi qu'une solution du partenaire de réaction soluble dans le milieu de réaction ou des solutions des partenaires de réaction solubles dans le milieu de réaction, dans l'extrémité inférieure d'un réacteur possédant un tube de réacteur (1) sensiblement vertical, on mélange intimement et transporte vers le haut la (les) suspension(s) et la (les) solution(s), en faisant monter et descendre de façon périodique et linéaire un piston disposé dans le tube de réacteur et possédant des gorges circonférentielles relativement plates, sans qu'un remélangeage sensible d'unités de volume ayant différents temps de séjour dans le tube de réacteur (1) se produise, et on prélève la suspension ou solution, contenant le produit de réaction de préférence soluble dans le milieu de réaction, à l'extrémité superieure du tube de réaction et on la traite le cas échéant de façon connue en soi, afin d'isoler le produit de réaction.

17. Procédé selon la revendication 16, caractérisé en ce que l'on diazote un composé aminé non soluble en milieu aqueux avec une solution aqueuse de nitrite et une solution aqueuse d'acide chlorhydrique et prélève une solution du composé diazonium dans le milieu de réaction à l'extrémité supérieure du tube de réacteur.

18. Procédé selon la revendication 17, caractérisé en ce que l'on ajoute à une suspension de 4-aminoazobenzène dans de l'eau, contenant de préférence un agent mouillant, une solution aqueuse de nitrite de sodium et on introduit la suspension obtenue, contenant du nitrite, en même temps qu'une solution d'acide chlorhydrique, dans l'extrémité inférieure du tube de réacteur.

_Fig. 1_

# Fig. 2

**Fig.3**

Fig. 4

Fig. 5

**Fig. 6**

0 221 849

**Fig. 1**